# EUROPÄISCHE PATENTSCHRIFT

(11) **EP 1 797 364 B1**
(45) Veröffentlichungstag und Bekanntmachung des Hinweises auf die Patenterteilung: **14.07.2010**
(21) Anmeldenummer: 05794405.0
(22) Anmeldetag: 07.10.2005
(51) Int. Cl.: F16L 33/23, F16L 33/22

(54) **SCHLAUCHANSCHLUSSEINRICHTUNG**
TUBE CONNECTION
DISPOSITIF DE RACCORDEMENT POUR TUYAUX SOUPLES

(30) Priorität: 08.10.2004 DE 102004049449
(43) Veröffentlichungstag der Anmeldung: 20.06.2007
(73) Patentinhaber: Eaton Fluid Power GmbH, 76532 Baden-Baden (DE)
(72) Erfinder: SCHERER, Eric, 76470 Ötigheim (DE); ERNST, Peter, 77836 Rheinmünster-Stollhofen (DE); SCHMIDT, Jürgen, 76437 Rastatt (DE)
(74) Vertreter: Leadbetter, Benedict
(86) Internationale Anmeldenummer: PCT/EP2005/010803
(87) Internationale Veröffentlichungsnummer: WO 2006/040082

(56) Entgegenhaltungen:
- DE-A1- 4 329 650
- FR-A- 1 227 889
- FR-A- 1 314 716
- US-A- 1 720 781

## Beschreibung

Die Erfindung betrifft eine Anschlusseinrichtung zum Anschließen von Schläuchen an Anschlussnippel, Rohrenden oder dergleichen.

Auf vielen technischen Gebieten, beispielsweise in Hydraulikanlagen, Klimaanlagen, Heizungsanlagen, in der Automobiltechnik usw., müssen fluiddichte, dauerhaft feste Verbindungen zwischen Schlauchleitungen und Rohrleitungen oder angeschlossenen Aggregaten oder sonstigen Baueinheiten hergestellt werden. Dabei kommt der Sicherheit der Verbindung, der langfristigen Dichtheit gegenüber dem in der Rohrleitung bzw. dem Schlauch fließenden Fluid, der Montagesicherheit und der Einfachheit der Herstellung der Verbindung besondere Bedeutung zu.

Aus der Gebrauchsmusterschrift Nr. 7314756 ist es bekannt, einen Schlauch, der ein inneres Wellrohr enthält, auf einem entsprechenden, in das Wellrohr passenden Nippel mit einer Presshülse zu sichern. Die Presshülse wird auf einen Bereich des Wellrohrs aufgeschoben, der von der äußeren Schlauchumhüllung befreit ist.

Ebenso veranschaulicht die DE-OS 3808383 die Sicherung eines Schlauchendes auf einem entsprechenden Nippel mittels einer Presshülse. Diese ist durch einen nach innen gerichteten Rand in einer entsprechenden Ringnut des Anschlussnippels gesichert oder hintergreift einen entsprechenden Flansch. Dazu muss die Presshülse entweder von der dem Schlauch abgewandten Seite axial über den Anschlussnippel geschoben werden oder der nach innen gerichtete Rand darf erst in einem Umformvorgang erzeugt werden, nachdem die vorher keinen nach innen gerichteten Rand aufweisende Hülse über den Schlauch und den Nippel geschoben worden ist.

Beides stellt erhebliche Einschränkungen hinsichtlich der Montagemöglichkeiten dar.

Aus der FR-A-1227889 ist eine Schlauchanschlussvorrichtung bekannt, die aus einem Schlauchnippel und einer Klemmvorrichtung besteht, die dazu eingerichtet ist, einen Schlauch auf dem Schlauchnippel festzuklemmen. Zur Befestigung dient eine aus vier Viertelschalen bestehende Manschette, die an einem Ende durch einen Ring zusammengehalten ist. An ihrem anderen Ende wird sie durch Bolzen zusammengehalten. An ihrem Innenumfang sind die einzelnen Schalen mit Schneidrippen versehen, die in den Schlauch greifen und diesen gegen den Nippel pressen.

Eine solche Schlauchverbindungseinrichtung beruht auf Schraubverbindungen, die erschütterungsempfindlich sind.

Davon ausgehend ist es Aufgabe der Erfindung, eine einfach herzustellende und dabei dauerhaft sichere Schlauchanschlusseinrichtung zu schaffen, mit der sich ein Schlauch anschließen lässt.

Diese Aufgabe wird mit der Schlauchanschlusseinrichtung gemäß Anspruch 1 gelöst:

Zu der erfindungsgemäßen Schlauchanschlusseinrichtung gehören ein Schlauchanschlusselement, das einen Schlauchaufnahmeabschnitt und einen sich an diesen anschließenden Radialvorsprung aufweist. Das Schlauchanschlusselement kann beispielsweise durch ein entsprechend profiliertes Rohrende einer aus Metall bestehenden Rohrleitung, einer aus Kunststoff bestehenden Rohrleitung oder ein Anschlussnippel sein, der mit weiteren Verbindungsmitteln, wie Rasteinrichtungen oder Gewinde versehen ist, um beispielsweise mit einem Kupplungsstück, einem Aggregat, wie beispielsweise einem Klimakompressor oder dergleichen, verbunden zu werden. Er kann auch selbst als Kupplungsstück ausgebildet sein, das eine Kupplungshälfte beispielsweise einer Steckkupplung bildet.

Das Schlauchanschlusselement lässt sich mit seinem Schlauchaufnahmeabschnitt in einen Schlauch einführen, wobei die Schlauchseele dann mit geringer Vorspannung an der Außenseite des Schlauchaufnahmeabschnitts anliegt. Zur Sicherung des Schlauchs an dem Schlauchanschlusselement dienen nun ein Haltebügel und ein Spannmittel. Der Haltebügel wird an das Schlauchanschlusselement angesetzt und stützt sich direkt unmittelbar oder vorzugsweise mittelbar an dem Radialvorsprung ab. Der Haltebügel weist zwei längliche, sich im Wesentlichen parallel zueinander erstreckende Halteschenkel auf. Diese sind in Einbaulage im Wesentlichen parallel zu dem Schlauchanschlusselement ausgerichtet. Vorzugsweise liegen die Halteschenkel an der Außenseite des Schlauchs an Durch Spannmittel, die sich um die Halteschenkel und die Außenseite des Schlauchs herum erstrecken, werden die Halteschenkel gegen die Außenseite des Schlauchs geklemmt und pressen somit den Schlauch an der Außenseite des Schlauchaufnahmeabschnitts an. Somit wird der zwischen dem Schlauchanschlusselement und der Innenseite der Schlauchseele vorhandene Form- und Reibschluss verstärkt. Ein entscheidendes Merkmal des Haltebügels ist jedoch, dass sich dieser mit seinem Steg mittelbar oder unmittelbar an dem Radialfortsatz des Schlauchanschlusselements abstützt. Dadurch ist sichergestellt, dass das Schlauchanschlusselement nicht.aus dem Schlauchende herausrutschen kann. Die Halteschenkel des Haltebügels werden durch das Spannmittel an der Außenseite des Schlauchs festgehalten. Vorzugsweise sind die Halteschenkel mit ein oder mehreren Kröpfungen versehen, so dass sie formschlüssig mit dem Spannmittel in Eingriff stehen. Durch diesen Formschluss wird verhindert, dass die Halteschenkel unter axialer Zugbelastung unter den Spannmitteln herausrutschen können.

Der Schlauchaufnahmeabschnitt ist vorzugsweise rohrförmig ausgebildet, wobei er wiederum vorzugsweise einen runden Querschnitt aufweist. An seiner Außenseite kann er bedarfsweise glatt ausgebildet sein. Vorzugsweise ist die Außenseite jedoch profiliert, d.h. mit einem Schlauchhalteprofil versehen. Dieses trägt zur axialen Sicherung des Schlauchs auf dem Schlauchanschlusselement bei.

Das Schlauchhalteprofil kann in Form einer oder mehrerer ringförmiger Rippen ausgebildet sein, die jeweils eine oder mehrere gegen die Schlauchabzugsrichtung gerichtete Kanten aufweisen. Außerdem kann an der Außenseite des Schlauchaufnahmeabschnitts wenigstens eine oder mehrere Ringnuten zur Aufnahme eines Dichtungselements vorgesehen sein, um die Abdichtung zwischen dem Schlauch und dem Schlauchanschlusselement zu verbessern bzw. sicherzustellen. Als Dichtungselement kommt ein O-Ring in Frage.

Der Radialvorsprung ist vorzugsweise als radialer Flansch ausgebildet. In der am meisten bevorzugten Ausführungsform handelt es sich um einen ringsum laufenden Scheibenflansch. An diesem stützt sich der Haltebügel mittelbar über einen Halter oder unmittelbar ab. Neben dem RadialvorSprung kann eine Nut zur Aufnahme des Halters vorgesehen sein, der seinerseits den Steg des Haltebügels aufnimmt und sich an dem Radialvorsprung abstützt.

Die insoweit beschriebene Form des Anschlusselements lässt sich in einem kombinierten Stauch- und Rolliervorgang jedenfalls aber in einem vollständig oder zumindest weitgehend spanlosen Umformvorgang herstellen. Dies hat den Vorzug, dass entlang des Schlauchanschlusselements keine Schwachstellen entstehen, die als Rissanfang wirken könnten.

Der erwähnte Halter ist vorzugsweise als Kunststoffteil ausgebildet, das sich auf das Schlauchanschlusselement seitlich aufstecken lässt. In Vorderansicht ist es beispielsweise ein c-förmiges Element. Es weist federnde Schenkel auf, mit denen es über den vorgesehenen Ringnutbereich des Rohranschlusselements geschoben werden kann. Seine Schenkel werden dabei vorübergehend federnd gespreizt und schnappen dann wieder zusammen, wodurch der Halter rastend gehalten ist. Er kann einen Schlitz zur Aufnahme des Stegs des Haltebügels aufweisen. Der Schlitz erstreckt sich in Umfangsrichtung über die Außenseite des Halters. Der Schlitz kann einen Boden aufweisen oder radial durchgehend, d.h. bodenlos ausgebildet sein. Auch ein unterbrochener Boden ist möglich. Vorzugsweise ist der Halter ein Kunststoffelement, beispielsweise ein Kunststoffspritzteil. Es kann jedoch auch ein Blechbiegeteil zur Anwendung kommen, das beispeilsweise durch mittige Faltung eines aus Blech bestehenden Stanzteils erzeugt worden ist.

Das Spannmittel kann beispielsweise durch ein Spannband gebildet sein, wie es zur Schlauchbefestigung Anwendung findet. Das Spannband kann mit einem formschlüssigen Spannschloss versehen sein, das mit einem geeigneten Spannwerkzeug in Eingriff gebracht wird.

Weitere Einzelheiten vorteilhafter Ausführungsformen der Erfindung sind Gegenstand der Zeichnung, der Beschreibung oder von Ansprüchen.

In der Zeichnung ist ein Ausführungsbeispiel der Erfindung veranschaulicht. Es zeigen:
- Figur 1: die Schlauchanschlusseinrichtung in montiertem Zu- stand in einer ersten Seitenansicht,

- Figur 2: die Schlauchanschlusseinrichtung nach Figur 1 in einer zweiten Seitenansicht,
- Figur 3: den Haltebügel der Schlauchanschlusseinrichtung in perspektivischer, gesonderter Darstellung,
- Figur 4: den Halter der Spanneinrichtung nach Figur 1 und 2 in einem anderen Maßstab und in gesonderter per- spektivischer Darstellung,
- Figur 5: den Halter nach Figur 4 in einer Vorderansicht,
- Figur 6: das Schlauchanschlusselement der Schlauchanschlus- seinrichtung in gesonderter Seitenansicht und
- Figur 7: ein zu der Schlauchanschlusseinrichtung nach Figur 1 und 2 gehöriges Spannband in geöffnetem Zustand in perspektivischer Ansicht.

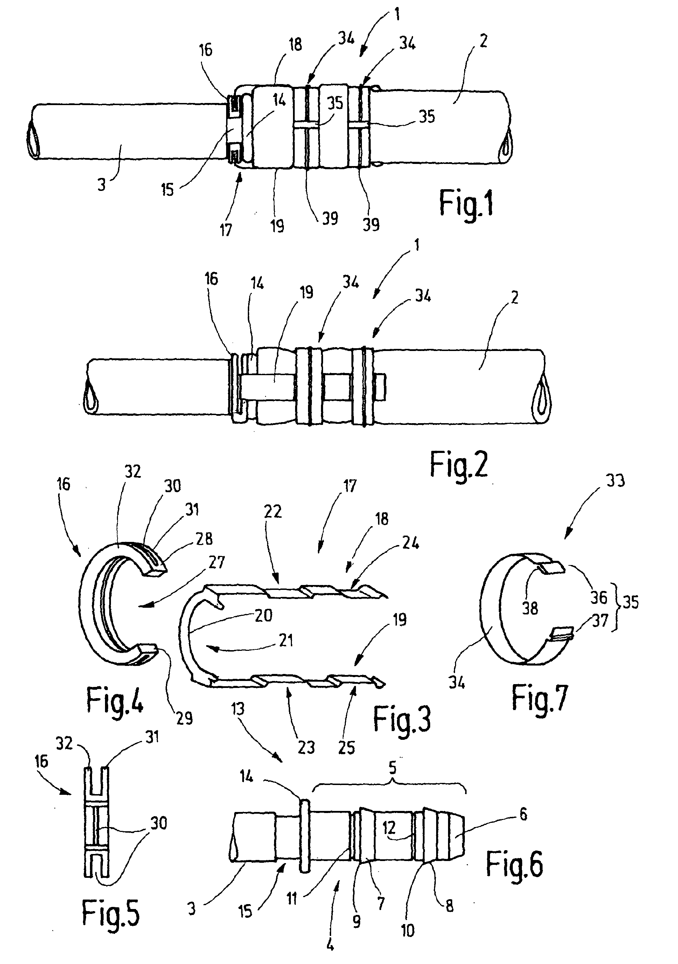

In Figur 1 ist eine Schlauchanschlusseinrichtung 1 veranschaulicht, mit der ein Schlauch 2 an eine Rohrleitung 3 angeschlossen ist. Der Schlauch 2 und die Rohrleitung 3 bilden eine Fluidleitung für ein unter Druck stehendes Fluid, wobei der Berstdruck beispielsweise auf über 100 bar (z.B. 140 bar) bemessen sein kann. Zu der Schlauchanschlusseinrichtung 1 gehören ein an dem Ende der Rohrleitung 3 angeformtes Schlauchanschlusselement 4, wie es in Figur 6 gesondert dargestellt ist. Das Schlauchanschlusselement 4 kann, wie erwähnt, das Ende der Rohrleitung 3 bilden oder als gesonderter Anschlussnippel ausgebildet sein, der an seinem in Figur 6 linken in der mit weiteren nicht veranschaulichten Verbindungsmitteln, wie beispielsweise einem Gewinde oder anderen Kupplungsmitteln, versehen ist.

Das Schlauchanschlusselement 4 ist rohrförmig ausgebildet und weist einen Schlauchaufnahmeabschnitt 5 auf. Die Außenseite desselben ist profiliert. Ausgehend von einer zylindrischen Grundform ist das Ende mit einer Fase 6 versehen, um das Einführen des Schlauchanschlusselements 4 in ein offenes Schlauchende zu erleichtern. An der Außenseite des Schlauchanschlussabschnitts sind außerdem ein oder mehrere ringförmige Rippen 7, 8 ausgebildet, die einen sägezahnförmigen Längsschnitt aufweisen. An ihrer von der Fase 6 weg weisenden Seite sind die Rippen 7, 8 mit einer vorzugsweise scharfen Kante 9, 10 versehen. Diese ist gegen die Schlauchabzugsrichtung gerichtet. Den Rippen 7, 8 benachbart können bedarfsweise jeweils Ringnuten 11, 12 angeordnet sein, die beispielsweise zur Aufnahme eines Dichtungselements wie eines O-Rings dienen können.

An den Schlauchaufnahmeabschnitt 5 schließt sich ein Radialvorsprung 13 an, der im vorliegenden Ausführungsbeispiel als radial orientierter Flansch 14, vorzugsweise als Scheibenflansch ausgebildet ist. Dieser ist vorzugsweise in einem Stauchprozess erzeugt. In Nachbarschaft zu dem Flansch 14 ist eine Nut 15 ausgebildet, deren Boden vorzugsweise zylindrisch ist und die zur Aufnahme eines aus Figur 4 und 5 ersichtlichen c-förmigen Halters 16 dient. Die Nut 15 schließt das Schlauchanschlusselement 4 ab. Es setzt sich ausgehend von der Nut 15 die Rohrleitung 3 fort.

Zu der Schlauchanschlusseinrichtung gehört weiter ein Haltebügel 17, wie er in gesondert aus Figur 3 hervorgeht. Der Haltebügel 17 weist zwei zueinander im Wesentlichen parallele Halteschenkel 18, 19 auf, die an einander gegenüber liegenden Seiten des Schlauchs 2 an dessen Außenseite anliegen. Dies ist aus Figur 1 ersichtlich. Die Halteschenkel 18, 19 sind untereinander durch einen Steg 20 verbunden, der eine maulartige Öffnung 21 umgrenzt. Diese ist so bemessen, dass der Steg 20 die Rohrleitung 3 oder zumindest den Boden der Nut 15 umgreifen kann.

Die Halteschenkel 18, 19 sind zueinander symmetrisch ausgebildet. Sie sind jeweils mehrfach gekröpft, so dass in jedem Halteschenkel 18, 19 wenigstens eine Ausnehmung 22, 23 und vorzugsweise eine weitere Ausnehmung 24, 25 ausgebildet ist. Jede dieser Ausnehmungen 22 bis 25 wird ausgebildet, indem der aus einem flachen Blech bestehende Halteschenkel 18 bzw. 19 jeweils zunächst radial nach innen abgewinkelt und dann wieder in seine ursprüngliche axiale Erstreckungsrichtung zurück gebogen wird. Die Ausnehmungen 22 bis 25 bilden somit flache Nuten oder Taschen.

Um den Haltebügel 17 an dem Schlauchanschlusselement 4 zu lagern, ist der ebenfalls zu der Schlauchanschlusseinrichtung gehörige und aus den Figuren 4 und 5 ersichtliche Halter 16 vorgesehen. Dieser ist vorzugsweise als Kunststoffelement ausgebildet. Er ist in Draufsicht c-förmig, wobei er zwei zwischen einander einen Spalt 27 festlegende Schenkel 28, 29 aufweist. Der Halter 16 folgt einem Kreisbogen über einen Winkel von mehr als 180°. Sein Innendurchmesser entspricht etwa dem Außendurchmesser des Bodens der Nut 15. Er ist somit im Rastsitz in der Nut 15 gehalten, wenn er unter federnder Aufweitung seiner Schenkel 28, 29 radial auf das Schlauchanschlusselement 4 aufgeschoben wird. Der Spalt 27 ist entsprechend groß bemessen, um dies ohne Beschädigung des Halters 16 zu ermöglichen.

Der Halter 16 ist mit einem sich nahezu um seinen gesamten Umfang herum erstreckenden Schlitz 30 versehen, der radial nach innen einen Boden aufweisen oder, wie in Figur 4 veranschaulicht, offen sein kann. Er dient der Aufnahme des Stegs 20 und unterteilt den Halter 16 in zwei zueinander parallel und im Abstand gehaltene c-förmige Teile 31, 32, die jeweils an den freien Enden der Schenkel 28, 29 unter einander verbunden sind. Der Halter 16 kann in dieser Form auch als Blechbiegeteil hergestellt werden. Vorzugsweise ist er jedoch ein Kunststoffteil.

Zu der Schlauchanschlusseinrichtung 1 gehört außerdem ein Spannmittel 33, das dazu dient, die Halteschenkel 18, 19 an der Außenseite des Schlauchs 2 festzuhalten. Das Spannmittel 33 ist gemäß Figur 7 beispielsweise ein Spannband 34 aus Stahl oder einem anderen geeigneten Werkstoff. Es weist eine Länge auf, die dem Umfang des Schlauchs 2 entspricht. An seinen freien Enden ist das Spannband 34 mit einem Spannschloss 35 versehen, zu dem zwei Schlosshälften 36, 37 gehören. Diese können gemäß Figur 7 ausgebildet. Beispielsweise kann die Schlosshälfte 37 als nach außen gerichtete Sicke ausgebildet sein während die Schlosshälfte 36 als Falz ausgebildet ist. Dieser lässt einen Aufnahmespalt 38 frei, in den die Sicke der Schlosshälfte 37 passt. Wie außerdem aus den Figuren 1 und 2 hervorgeht kann das Spannband 34 mit einer in Umfangsrichtung umlaufenden aussteifenden Sicke 39 versehen sein.

Die Herstellung der Schlauchverbindung mittels der Schlauchanschlusseinrichtung 1 geht folgendermaßen:

Es wird zunächst der Schlauch 2 mit seinem offenen Ende auf den Schlauchaufnahmeabschnitt 5 des Schlauchanschlusselements 4 bzw. der Rohrleitung 3 aufgeschoben bis er mit seiner Stirnseite an dem Flansch 14 anstößt. Sodann wird der Halter 16 in die Nut 15 eingesetzt, indem er seitlich aufgeklippst wird. In diesem Zustand kann der Haltebügel 17 angebracht werden, indem sein Steg 20 in den Schlitz 30 eingeschoben wird, wobei seine beiden Halteschenkel 18, 19 an einander diametral gegenüber liegenden Seiten des Schlauchs 2 zu liegen kommen. Sie erstrecken sich dabei parallel zu der Schlauchlängsrichtung. Es werden nun in die Ausnehmungen 22, 23 sowie 24, 25 der Halteschenkel 18, 19 jeweils ein Spannband 34 eingelegt und mit einer entsprechenden Spannzange oder einem sonstigen Spannwerkzeug geschlossen. Dies erfolgt unter fester Anpressung der Halteschenkel 18, 19 an den Schlauch 2, wodurch dieser komprimiert und seinerseits fest an die Außenseite des Schlauchaufnahmeabschnitts 5 angepresst wird. Die Spannbänder 34 drücken sich, wie insbesondere aus Figur 2 hervorgeht, etwas in die Außenseite des Schlauchs 2 ein. Sie sind dadurch axial unverschiebbar an dem Schlauch 2 gehalten. Indem sie in den Ausnehmungen 22 bis 25 liegen, halten sie auch die Halteschenkel 18, 19 bezüglich der Axialrichtung an dem Schlauch 2 fest. Außerdem spannt sich durch die geringe Verformung des Schlauchs 2 der Steg 20 gegen den Halter 16 und somit dieser gegen den Flansch 14. Die nach innen abgewinkelten Enden der Halteschenkel 18, 19 drücken sich ebenfalls in die Außenseite des Schlauchs 2 ein.

Mit der Sicherung der Spannbänder 34 ist die Verbindung vollständig hergestellt. Der Haltebügel 17 stützt sich über den Halter 16 mittelbar an dem Flansch 14 ab und verhindert sowohl, dass der Schlauch 2 von dem Schlauchaufnahmeabschnitt 5 axial abgezogen wird, als auch dass der Schlauchaufnahmeabschnitt 5 axial aus dem Schlauchende herausgedrückt wird.

Die Verbindung ist einfach herstellbar, zuverlässig, dauerhaft dicht und vielseitig anwendbar.

Die erfindungsgemäße Schlauchanschlusseinrichtung 1 nutzt einen Haltebügel 17 zur Befestigung eines Schlauchendes an einem Schlauchanschlusselement 4. Der an einem Flansch 14 des Schlauchanschlusselements 4 verankerte Haltebügel 17 weist zwei Halteschenkel 18, 19 auf, die mittels Spannbändern 34 an der Außenseite des Schlauchs 2 verankert sind. Die Halteschenkel 18, 19 liegen dabei zwischen der Außenseite des Schlauchs 2 und den Spannbändern 34 und sind dort eingeklemmt. Außerdem weisen sie Ausnehmungen 22 bis 25 auf, mit deren Flanken bzw, stufenartigen Rändern sie sich an den Spannbändern 34 formschlüssig abstützen. Die Spannbänder 34 drücken sich in die Außenseite des Schlauchs 2 ein und sitzen somit ebenfalls formschlüssig an dem Schlauch. Es entsteht dadurch eine einfach herzustellende, zuverlässige und kostengünstige Verbindung zwischen dem Schlauch 2 und beispielsweise einer Rohrleitung 3.

## Patentansprüche

1. Schlauchanschlusseinrichtung (1), insbesondere für Hochdruckanwendungen,
mit einem Schlauchanschlusselement (4), das einen Fortsatz mit einem Schlauchaufnahmeabschnitt (5) zur Aufnahme eines Schlauches (2) und einen Radialvorsprung (13) aufweist, der sich an den Schlauchaufnahmeabschnitt (5) anschließt,
mit einem Haltebügel (17), der zumindest zwei sich axial an der Außenseite des Schlauches (2) in Schlauchlängsrichtung entlang erstreckende federnde Halteschenkel (18, 19) aufweist, die über einen sich an dem Radialvorsprung (13) abstützenden Steg (20) miteinander verbunden sind, und
mit wenigstens einem Spannmittel (33), das die Außenseite des Schlauches (2) und die Halteschenkel (18,19) in Radialrichtung umgreift und die Halteschenkel (18, 19) gegen die Außenseite spannt,
mit einem Haltes (16), der c-förmig ausgebildet ist,
wobei neben dem Radialvorsprung (13) eine Nut (15) zur Aufnahme des Halters (16) vorgesehen ist, der den Steg (20) des Haltebügels (17) aufnimmt und der sich seinerseits an dem Radialvorsprung (13) abstützt.

2. Schlauchanschlusseinrichtung nach Anspruch 1, **dadurch gekennzeichnet, dass** der Schlauchaufnahmeabschnitt (5) rohrförmig ausgebildet ist.

3. Schlauchanschlusseinrichtung nach Anspruch 1, **dadurch gekennzeichnet, dass** der Schlauchaufnahmeabschnitt (5) an seiner Außenseite mit einem Schlauchhalteprofil versehen ist.

4. Schlauchanschlusseinrichtung nach Anspruch 3, **dadurch gekennzeichnet, dass** das Schlauchhalteprofil wenigstens eine ringförmige Rippe (7, 8) mit einer gegen die Schlauchabzugsrichtung gerichteten Kante (9, 10) aufweist.

5. Schlauchanschlusseinrichtung nach Anspruch 1, **dadurch gekennzeichnet, dass** der Schlauchaufnahmeabschnitt (5) an seiner Außenseite wenigstens eine Ringnut (11, 12) zur Aufnahme eines Dichtungselements aufweist.

6. Schlauchanschlusseinrichtung nach Anspruch 1, **dadurch gekennzeichnet, dass** der Radialvorsprung (13) als radialer Flansch (14) ausgebildet ist.

7. Schlauchanschlusseinrichtung nach Anspruch 6, **dadurch gekennzeichnet, dass** der Flansch (14) ein Scheibenflansch ist.

8. Schlauchanschlusselement nach Anspruch 1, **dadurch gekennzeichnet, dass** der Schlauchaufnahmeabschnitt (5) ein spanlos erzeugtes Umformteil ist.

9. Schlauchanschlusseinrichtung nach Anspruch 1, **dadurch gekennzeichnet, dass** der Halter (16) einen sich entlang seines Umfanges erstreckenden Schlitz (30) zur Aufnahme des Stegs (20) des Halterbügels (17) aufweist.

10. Schlauchanschlusseinrichtung nach Anspruch 9, **dadurch gekennzeichnet, dass** der Schlitz (30) radial durchgehend ausgebildet und **dadurch** an seiner radial inneren Seite offen ist.

11. Schlauchanschlusseinrichtung nach Anspruch 9, **dadurch gekennzeichnet, dass** der Schlitz (30) an seiner radial inneren Seite mit einem Boden geschlossen ist.

12. Schlauchanschlusseinrichtung nach Anspruch 1, **dadurch gekennzeichnet, dass** der Halter (16) ein Kunststoffelement ist.

13. Schlauchanschlusseinrichtung nach Anspruch 1, **dadurch gekennzeichnet, dass** der Halter (16) ein Blechbiegeteil ist.

14. Schlauchanschlusseinrichtung nach Anspruch 1, **dadurch gekennzeichnet, dass** die Halteschenkel (18, 19) Ausnehmungen (22, 23, 24, 25) zur Aufnahme des Spannmittels (33) aufweisen.

15. Schlauchanschlusseinrichtung nach Anspruch 1, **dadurch gekennzeichnet, dass** das Spannmittel (33) eine Schlauchschelle oder ein Spannband (34) ist.

16. Schlauchanschlusseinrichtung nach Anspruch 15, **dadurch gekennzeichnet, dass** das Spannband (34) ein formschlüssiges Spannschloss (35) aufweist.

## Claims

1. Hose connecting device (1), in particular for high-pressure applications, comprising a hose connecting device element (4) that has an extension with a hose receiving section (50) for receiving a hose (2) and a radial projection (13) adjoining the hose receiving section (5),
a retaining bracket (17) which has at least two resilient retaining limbs (18, 19) extending axially on the outside of the hose (2) in longitudinal direction of the hose, said retaining limbs being connected with each other by means of a strip (20) supported by the radial projection (13), and
at least one tension means (33) that encloses the outside of the hose (2) and the retaining limbs (18, 19) in radial direction and tensions the retaining limbs (18, 19) with respect to the outside,
a C-shaped holder (16),
wherein next to the radial projection (13), a groove (15) for the accommodation of said holder (16) is provided, said groove accommodating the strip (20) of said retaining bracket (17) and, in turn, being supported by the radial projection (13).

2. Hose connecting device in accordance with Claim 1, **characterized in that** the hose receiving connection (5) has a tubular configuration.

3. Hose connecting device in accordance with Claim 1, **characterized in that** the hose receiving section (5) is provided, on its outside, with a hose holding profile.

4. Hose connecting device in accordance with Claim 3, **characterized in that** the hose holding profile comprises at least one annular rib (7, 8) with an edge facing against the hose pull-off direction.

5. Hose connecting device in accordance with Claim 1, **characterized in that** the hose receiving section (5) comprises, on its outside, at least one annular groove (11, 12) for the accommodation of a sealing element.

6. Hose connecting device in accordance with Claim 1, **characterized in that** the radial projection (13) is configured as a radial flange (14).

7. Hose connecting device in accordance with Claim 6, **characterized in that** the flange (14) is a disk flange.

8. Hose connecting device in accordance with Claim 1, **characterized in that** the hose receiving section (5) is a reformed part produced without cutting.

9. Hose connecting device in accordance with Claim 1, **characterized in that** the holder (16) comprises a slit (30) extending along said holder's circumference for the accommodation of the strip (20) of the retaining bracket (17).

10. Hose connecting device in accordance with Claim 9, **characterized in that** the slit (30) is configured in a radially continuous manner and is thus open on its radially inner side.

11. Hose connecting device in accordance with Claim 9, **characterized in that** the slit (30) is closed on its radially inner side by a bottom.

12. Hose connecting device in accordance with Claim 1, **characterized in that** the holder (16) is an element of plastic material.

13. Hose connecting device in accordance with Claim 1, **characterized in that** the holder (16) is a bent sheet metal part.

14. Hose connecting device in accordance with Claim 1, **characterized in that** the retaining limbs (18, 19) have cutouts (22, 23, 24, 25) for the accommodation of the tension means (33).

15. Hose connecting device in accordance with Claim 1, **characterized in that** the tension means (33) is a hose clamp or a tightening strap (34).

16. Hose connecting device in accordance with Claim 15, **characterized in that** the tightening strap (34) has a form-closed tension lock (35).

## Revendications

1. Dispositif de raccord de tuyau (1), notamment pour des applications haute pression,
avec un élément de raccord de tuyau (4) qui présente un prolongement avec une section de réception de tuyau (5) pour recevoir un tuyau (2) et une saillie radiale (13) qui se raccorde à la section de réception de tuyau (5),
avec un étrier de retenue (17) qui présente au moins deux branches de retenue élastiques (18, 19) s'étendant axialement le long du côté extérieur du tuyau (2) dans la direction longitudinale du tuyau, branches qui sont reliées ensemble par le biais d'une traverse (20) s'appuyant sur la saillie radiale (13), et
avec au moins un moyen de serrage (33) qui entoure le côté extérieur du tuyau (2) et les branches de retenue (18, 19) dans la direction radiale et serre les branches de retenue (18, 19) contre le côté extérieur,
avec un support (16) qui est réalisé en forme de c, une rainure (15) étant prévue près de la saillie radiale (13) pour recevoir le support (16) qui reçoit la traverse (20) de l'étrier de retenue (17) et s'appuie de son côté sur la saillie radiale (13).

2. Dispositif de raccord de tuyau selon la revendication 1, **caractérisé en ce que** la section de réception de tuyau (5) est réalisée de manière tubulaire.

3. Dispositif de raccord de tuyau selon la revendication 1, **caractérisé en ce que** la section de réception de tuyau (5) est pourvue sur son côté extérieur d'un profil de retenue de tuyau.

4. Dispositif de raccord de tuyau selon la revendication 3, **caractérisé en ce que** le profil de retenue de tuyau présente au moins une nervure annulaire (7, 8) avec une arête (9, 10) orientée à l'encontre de la direction de retrait de tuyau.

5. Dispositif de raccord de tuyau selon la revendication 1, **caractérisé en ce que** la section de réception de tuyau (5) présente sur son côté extérieur au moins une rainure annulaire (11, 12) pour recevoir un élément d'étanchéité.

6. Dispositif de raccord de tuyau selon la revendication 1, **caractérisé en ce que** la saillie radiale (13) est réalisée en tant que bride radiale (14).

7. Dispositif de raccord de tuyau selon la revendication 6, **caractérisé en ce que** la bride (14) est une bride à disque.

8. Dispositif de raccord de tuyau selon la revendication 1, **caractérisé en ce que** la section de réception de tuyau (5) est une pièce déformée fabriquée sans contraintes.

9. Dispositif de raccord de tuyau selon la revendication 1, **caractérisé en ce que** le support (16) présente une fente (30) s'étendant le long de son pourtour pour recevoir la traverse (20) de l'étrier de retenue (17).

10. Dispositif de raccord de tuyau selon la revendication 9, **caractérisé en ce que** la fente (30) est réalisée de manière traversante radialement et est de ce fait ouverte sur son côté intérieur radial.

11. Dispositif de raccord de tuyau selon la revendication 9, **caractérisé en ce que** la fente (30) est fermée par un fond sur son côté intérieur radial.

12. Dispositif de raccord de tuyau selon la revendication 1, **caractérisé en ce que** le support (16) est un élément en plastique.

13. Dispositif de raccord de tuyau selon la revendication 1, **caractérisé en ce que** le support (16) est une pièce pliée en tôle.

14. Dispositif de raccord de tuyau selon la revendication 1, **caractérisé en ce que** les branches de retenue (18, 19) présentent des évidements (22, 23, 24, 25) pour recevoir le moyen de serrage (33).

15. Dispositif de raccord de tuyau selon la revendication 1, **caractérisé en ce que** le moyen de serrage (33) est un collier de serrage ou un collier de fixation (34).

16. Dispositif de raccord de tuyau selon la revendication 15, **caractérisé en ce que** le collier de serrage (34) est un manchon de serrage (35) à fermeture géométrique.
